# EUROPÄISCHE PATENTSCHRIFT

(11) **EP 2 911 817 B1**
(45) Veröffentlichungstag und Bekanntmachung des Hinweises auf die Patenterteilung: **31.07.2019**
(21) Anmeldenummer: 13766561.8
(22) Anmeldetag: 27.09.2013
(51) Int. Cl.: B23B 29/26, B23Q 11/10

(54) **KEILKLEMMVORRICHTUNG MIT KÜHLMITTELKANAL, SOWIE HERSTELLUNGSVERFAHREN EINER SOLCHEN KEILKLEMMVORRICHTUNG**
WEDGE CLAMPING DEVICE WITH COOLANT CHANNEL AND METHOD OF PRODUCING SUCH A CLAMPING DEVICE
DISPOSITIF DE SERRAGE AVEC COIN DOTÉ D'UN CONDUIT DE FLUIDE DE REFROIDISSEMENT ET PROCÉDÉ DE FABRICATION D'UN TEL DISPOSITIF DE SERRAGE

(30) Priorität: 25.10.2012 CH 20992012
(43) Veröffentlichungstag der Anmeldung: 02.09.2015
(73) Patentinhaber: Utilis AG, 8555 Müllheim Dorf (CH)
(72) Erfinder: MACARIO, Mario, CH-9606 Bütschwil (CH); FABOZZI, Carmine, CH-9542 Münchwilen (CH)
(74) Vertreter: Schneider Feldmann AG Patent- und Markenanwälte
(86) Internationale Anmeldenummer: PCT/EP2013/070186
(87) Internationale Veröffentlichungsnummer: WO 2014/063899

(56) Entgegenhaltungen:
- EP-A1- 0 257 005
- EP-A1- 2 484 486
- EP-A2- 1 413 375
- WO-A1-2011/024558
- DE-A1- 3 434 653
- DE-A1-102011 016 148
- JP-A- 2001 300 802
- JP-A- 2003 025 184
- US-A- 3 323 195

## Beschreibung

### Technisches Gebiet

Die vorliegende Erfindung beschreibt eine Keilklemmvorrichtung einer Werkzeugaufnahmeplatte für einen Drehautomat gemäß dem Oberbegriff des Patentanspruchs 1, mittels welcher ein Werkzeughalter orts- und drehfest in einem Aufnahmeschacht der Werkzeugaufnahmeplatte lösbar befestigbar ist, wobei die Klemmvorrichtung mittels Befestigungsmitteln lösbar an der Werkzeugaufnahmeplatte befestigbar ist, sowie ein Herstellungsverfahren und Umrüstungsverfahren einer solchen Keilklemmvorrichtung.

### Stand der Technik

Eine Keilklemmvorrichtung gemäß dem Oberbegriff des Patentanspruchs 1 geht beispielsweise aus der JP 2001 300802 A hervor. Bekannte automatisierte Drehmaschinen, insbesondere automatisierte Langdrehautomaten werden heute zur Fertigung einer Vielzahl von Produkten in grossen Stückzahlen für den Einsatz in unterschiedlichen technischen Bereichen eingesetzt. Derartige Langdrehautomaten erlauben eine vollautomatische Herstellung von Dreh- und Frästeilen, da eine automatische Werkstückzuführung verwendet wird.

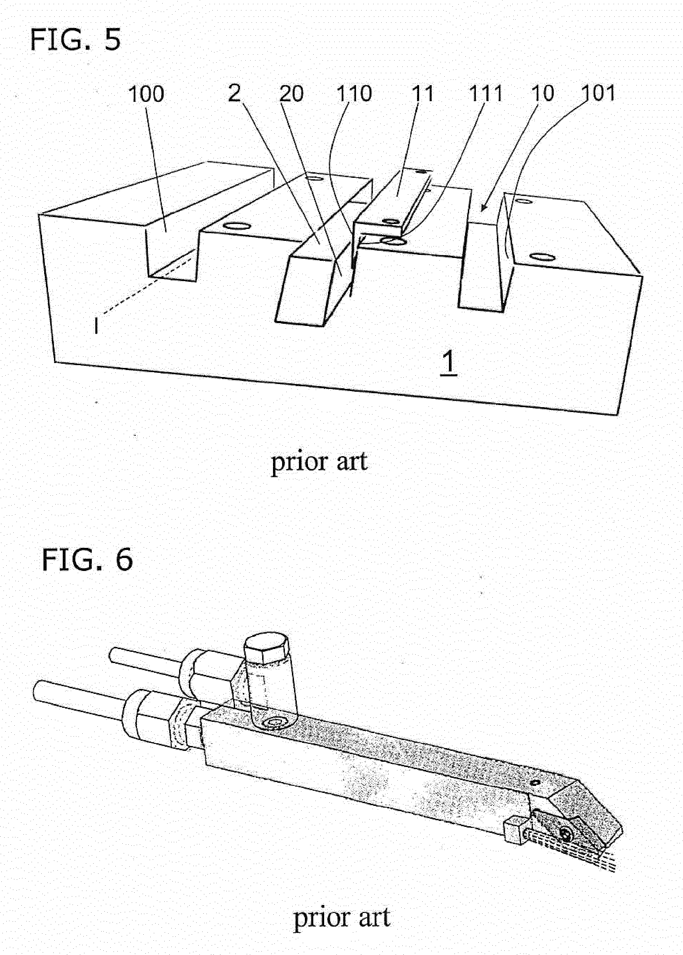

In einer Werkzeugaufnahmeplatte, welche üblicherweise mindestens vier Aufnahmeschächte aufweist, kann eine Mehrzahl von Werkzeughaltern, welche jeweils mit mindestens einem Werkzeug versehen sind, eingespannt werden. Die Werkzeugaufnahmeplatte weist mehrere Aufnahmeschächte auf, in welche die Werkzeughalter parallel ausgerichtet lösbar gehalten geklemmt mittels Klemmvorrichtungen befestigt werden. Die Werkzeughalter sind in der Regel schaftförmig ausgebildet, wobei an dem, dem Werkstück zugewandten Ende, das Werkzeug, beispielsweise in Form einer Wendeschneidplatte, lösbar fixiert ist. Bei Verwendung mehrerer Werkzeughalter in der Werkzeugaufnahmeplatte kann wahlweise schnell und einfach das zu verwendende Werkzeug gewählt und mit dem Werkstück in Kontakt gebracht werden. Durch die Ausführung einer Relativbewegung zwischen Werkzeugaufnahmeplatte und Werkstück wird dann der Drehprozess durchgeführt. Eine bekannte derartige Werkzeugaufnahmeplatte mit eingeklemmten Werkzeughalter ist in Figur 5 schematisch gezeigt.

Zur Kühlung des Dreh- oder Fräswerkzeuges während des Drehprozesses, wird Kühlmittel an das Werkzeug gebracht und das möglichst in geringem Abstand, um eine optimale Kühlwirkung zu erreichen.

Dies kann zum einen durch von der Werkzeugaufnahmeplatte beabstandete Kühlmittelleitungen geschehen, welche unterschiedliche Formen aufweisen. Eine derartige Kühlmittelleitung wird auf das Werkzeug vom der Werkzeugaufnahmeplatte entfernt so ausgerichtet, dass das Kühlmittel in einem gezielten Strahl auf das Werkzeug gerichtet gespritzt werden kann. In der Praxis zeigt sich, dass eine optimale Einstellung des Kühlmittelstrahles auf das Werkzeug schwierig ist. Des weiteren stört die in den Raum des Werkzeuges bzw. des zu bearbeitenden Werkstückes ragende Kühlmittelleitung aufgrund ihrer Gestaltung oft, wenn beispielsweise fertige Werkstücke von in Maschinen integrierten Handlingeinheiten automatisiert entnommen werden sollen. Auch wenn die Kühlmittelleitungen miniaturisiert werden, stören diese bei einer automatisierten Entnahme von Werkstücken und es kann zu Kollisionen der Handlingeinheit mit der Kühlmittelleitung kommen.

Wenn derartige Kühlmittelleitungen weiter entfernt angeordnet werden, um die automatisierte Entnahme zu verbessern, sollte der Druck des Kühlmittels erhöht werden, um eine gewünschte Kühlwirkung zu erzielen. Durch Kühlmittel, welches dann unter höherem Druck auf das Werkzeug auftrifft, wird der Schneid- oder Zerspanprozess allerdings beeinflusst, indem der Spanfluss gestört wird. Der Span kann wieder zurück auf das Bauteil gelenkt werden und sich um die Bauteile herumwickeln, was unerwünscht ist, da dieser Span von Hand wieder zu entfernen ist. Somit ist eine vollautomatische Zerspanung verunmöglicht.

Man ist von zusätzlichen störenden Kühlmittelleitungen weggegangen und hat einen Werkzeughalter geschaffen, in welchem durch Bohrungen ein interner Kühlmittelkanal den Werkzeughalter querend angeordnet ist, dies ist beispielhaft in Figur 6 gezeigt. Die Kühlmittelzuleitung wird an einem entsprechenden Anschluss am Werkzeughalter, an der vom Werkzeug abgewandten Seite angeschlossen. Durch den Kühlmittelkanal wird Kühlmittel den Werkzeughalter querend bis in unmittelbare Nähe des Zerspanprozesses gebracht und durch einen Sprühauslass, welcher an den Werkzeughalter im Bereich des Werkzeuges angeformt ist, abgegeben.

Der Spanfluss und damit der Schneidprozess werden kaum gestört, da das Kühlmittel lokal eingeschränkt auf das Werkzeug gesprüht werden kann. Da es keine störenden Aufbauten im Bereich des Werkzeuges gibt, können Bauteile auch automatisiert entnommen werden.

Da die Kühlmittelzuleitung am Werkzeughalter befestigt werden muss, damit das Kühlmittel wie gewünscht durch den Werkzeughalter strömen kann, muss jeder Werkzeughalter entsprechend speziell ausgestaltet sein. Es wurden auch Lösungen probiert, welche den Kühlmittelkanal aus dem Werkzeughalter in ein speziell geformtes Werkzeug fortsetzen. Entsprechend muss auch das Werkzeug den Anforderungen genügen und es kann nicht jedes Standardwerkzeug benutzt werden. Aber nicht nur, dass die Werkzeughalter und eventuell die Werkzeuge mit einem geeigneten Kühlmittelkanal ausgestattet sein müssen, auch die Anwendung ist erschwert. Wenn ein Werkzeug ausgewechselt werden muss, muss der Werkzeughalter aus der Werkzeugaufnahmeplatte entfernt werden. Dazu muss jeweils auch die Kühlmittelzuleitung vom Werkzeughalter abgekoppelt werden und entsprechend später wieder angeschlossen werden, was mit Zusatzaufwand verbunden ist. Wenn die Werkzeuge und/oder nur die Werkzeughalterungen mit einem Kühlkanal ausgestattet sind, dann sind die Werkzeughalterungen und/oder die Werkzeuge speziell anzufertigen und entsprechend teuer und aufwändig in der Herstellung. Es können keine einfachen schaftartigen Werkzeughalter mehr verwendet werden, da ansonsten keine optimale Kühlung möglich ist. Um die Werkzeuge zu kühlen, müssen zumindest die Werkzeughalterungen mit einem Kühlmittelkanal ausgestattet werden. Im Drehbetrieb muss die Kühlmittelleitung mit dem Werkzeughalter gekoppelt werden und sobald ein Werkzeug ausgewechselt werden muss, muss vor dem Austausch des Werkzeughalters bzw. des Werkzeuges die Kühlmittelleitung entfernt werden.

Um bekannte Werkzeughalter mit rundem Querschnitt mit einer Kühlzuleitung zu versehen, offenbart die DE112008003674 ein zusätzliches Bauteil, welches eine exzentrische Aussparung für einen bekannten im Wesentlichen runden Werkzeughalter aufweist und mit einem in das Bauteil gebohrten Kanal versehen ist, durch welchen Kühlmittel an das werkzeugseitige Ende des Werkzeughalters bringbar ist. Das zusätzliche Bauteil wird auf den aufzunehmenden im Wesentlichen runden Werkzeughalter speziell abgestimmt und es werden Befestigungsmittel vorgesehen, um den Werkzeughalter in der exzentrischen Aussparung zu halten.

Durch Verwendung des zusätzlichen Bauteils gemäss DE112008003674 könnte ein bestehender schaftförmiger Werkzeughalter verwendet werden und in der angefertigten exzentrischen Aussparung befestigt werden. Wenn ein Werkzeug oder der Werkzeughalter gewechselt werden muss, kann eine Kühlmittelzuleitung, die mit dem Kanal kommuniziert, am Bauteil während des Wechsels des Werkzeughalters bestehen bleiben.

Für die Nachrüstung bestehender Drehautomaten müssen wie oben beschrieben zusätzliche Bauteile angefertigt werden, in welche bestehende Werkzeughalter eingeführt werden können, wobei die Werkzeughalter direkt in den zusätzlichen Bauteilen verschraubbar sein sollen. Ein derartiges Extrabauteil ist teuer in der Herstellung. Es wird in der Regel Stahl verwendet, wobei exakte Bohrungen angefertigt werden müssen, die das Extrabauteil queren, sodass ein geeigneter Kühlmittelkanal im Extrabauteil verlaufend ausgebildet werden kann.

Da bestehende Langdrehautomaten Werkzeugaufnahmeplatten mit mindestens einem Schacht zur Aufnahme von standardisierten Werkzeughaltern aufweisen, muss zur Aufnahme des zusätzlichen Bauteils entsprechend auch die bestehende Werkzeugaufnahmeplatte an der Drehmaschinen verändert werden.

### Darstellung der Erfindung

Die vorliegende Erfindung hat sich zur Aufgabe gestellt eine Möglichkeit zu schaffen, eine optimierte Kühlung von Werkzeugen im Betrieb zu schaffen, wobei ein Kühlmittelstrahl in unmittelbare Nähe des Werkzeuges gebracht wird, ein vereinfachtes Auswechseln des Werkzeugs bzw. des Werkzeughalters ohne Abkopplung der Kühlmittelleitung, sowie ein einfaches Aufrüsten bekannter Werkzeugaufnahmeplatten bestehender Drehautomaten, ohne Veränderungen am Drehautomaten, ermöglicht ist.

Dies wird mit einer Keilklemmvorrichtung gemäß dem Patentanspruch 1 für die Werkzeughalter in mindestens einem Schacht der Werkzeugaufnahmeplatte erreicht. Neben der Fixierung dient damit die Klemmvorrichtung zur Leitung des Kühlmittels mittels Kühlmittelkanal, womit die Klemmvorrichtung zwei Funktionen hat.

Die Umrüstung einer bestehenden Keilklemmvorrichtung unter anderem durch Einformung einer Nut als Kühlmittelkanal wird im Anspruch 12 beansprucht.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1: zeigt eine perspektivische Ansicht einer Werkzeugaufnahmeplatte mit zwei Klemmvorrichtung und einem lösbar gehaltenen Werkzeughalter.
- Figur 2a: zeigt eine Seitenansicht eines Werkzeughalters und einer Klemmvorrichtung, wobei die Werkzeugaufnahmeplatte der Übersichtlichkeit halber weggelassen wurde, während
- Figur 2b: eine Schnittansicht entlang der Linie C-C aus Figur 2a zeigt.
- Figur 3: zeigt einen Längsschnitt durch eine Klemmvorrichtung mit exzentrisch verlaufendem Kühlmittelkanal, während
- Figur 4: eine perspektivische Ansicht einer Klemmvorrichtung mit als Nut ausgeführtem Zwischenkanal und gestrichelt angedeutetem Werkzeughalter zeigt.
- Figur 5: zeigt eine perspektivische schematische Ansicht einer Werkzeugaufnahmeplatte mit Klemmvorrichtung zur lösbaren Verbindung von schaftförmigen Werkzeughaltern gemäss Stand der Technik.
- Figur 6: zeigt eine perspektivische Ansicht eines Werkzeughalters mit integriertem Kühlmittelkanal und Auslassdüse im Bereich des Werkzeuges.

### Beschreibung

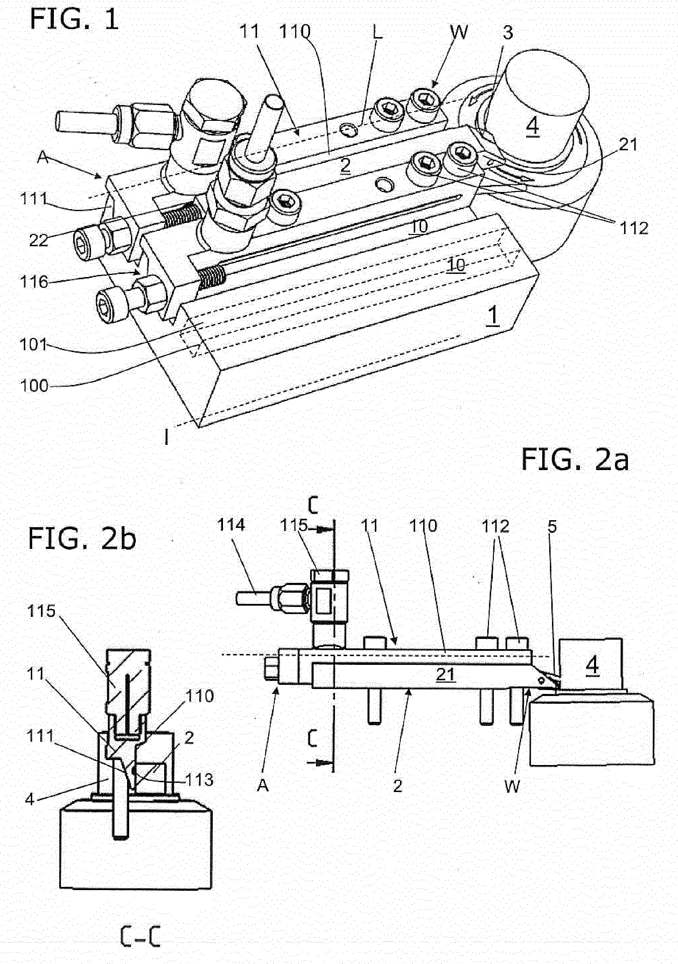

Eine Werkzeugaufnahmeplatte 1 für eine Drehmaschine, genauer für Drehautomaten und damit für eine Drehmaschine, in welcher ein spanabhebender Fertigungsprozess eines Werkstückes 4 vollautomatisch ablaufen kann, ist in Figur 1 dargestellt. Dabei ist die Drehmaschine sowie Automatisierungsvorrichtungen, beispielsweise in der Drehmaschine integrierte Handlingeinheiten zur automatischen Bestückung einer Werkstückaufnahme mit Werkstücken der Übersichtlichkeit wegen, nicht dargestellt worden.

Die Werkzeugaufnahmeplatte 1 weist eine Mehrzahl von Aufnahmeschächten 10 auf. Hier handelt es sich um eine standardmässig verwendete und kommerziell erhältliche Werkzeugaufnahmeplatte 1, welche weit verbreitet in handelsüblichen Langdrehautomaten eingesetzt wird, wobei zwei ausgesparte Aufnahmeschächte 10 dargestellt sind. Die Werkzeugaufnahmeplatte 1 ist aufgrund der Formgebung der Aufnahmeschächte 10 für die Aufnahme von Werkzeughaltern 2 mit einem Schaft optimiert und ist kommerziell erhältlich. Der Werkzeughalter 2 trägt werkzeugseitig in einer Werkzeugaussparung ein Werkzeug 3, beispielsweise eine Wendeschneidplatte 3, wie in den Figuren hier dargestellt. Eine Relativbewegung zwischen der Werkzeugaufnahmeplatte 1 und damit zwischen mindestens einem eingelegten Werkzeug 3 und einem Werkstück 4 ist durchführbar, wodurch die spanabhebende Bearbeitung durchführbar ist.

Jeder Aufnahmeschacht 10 ist durch eine Auflagefläche, eine Werkzeuganlagefläche 100 und eine gegenüberliegende Klemmkeilanlagefläche 101 gebildet, wobei diese Flächen in Richtung der Längsrichtung I der Werkzeugaufnahmeplatte 1 verlaufen.

Nach Einlegen des Werkzeughalters 2 in den Aufnahmeschacht 10 wird dieser derart in Längsrichtung I ausgerichtet, dass das Werkzeug 3 aus dem Aufnahmeschacht 10 herausragt und mit dem Werkstück 4 wie gewünscht in Kontakt bringbar ist. Ist die Ausrichtung des Werkzeughalters 2 erfolgt, wird dieser mittels einer Klemmvorrichtung 11 lösbar im Aufnahmeschacht 10 klemmend fixiert. Die Klemmvorrichtung 11 weist entlang ihrer Längsachse L ein werkzeugseitiges Ende W auf und ein anschlagseitiges Ende A auf. Durch die Klemmvorrichtung wird eine orts- und drehfeste Fixierung des Werkzeughalters 2 erreicht.

Zur Fixierung des Werkzeughalters 2 wird die Klemmvorrichtung 11, die eine keilartige Form in einer Ebene senkrecht zur Längsachse L der Klemmvorrichtung 11 hat, zwischen eine erste Seitenfläche 20 des Werkzeughalters 2 und die Klemmkeilanlagefläche 101 des Aufnahmeschachtes 10 eingeführt. Die Klemmvorrichtung 11 drückt den Werkzeughalter 2 mit einer zweiten Seitenfläche 21 gegen eine Werkzeuganlagefläche 100 des Aufnahmeschachts 10. Eine Klemmfläche 110 liegt dabei direkt an der ersten Seitenfläche 20 des Werkzeughalters 2 parallel verlaufend an, während eine Keilfläche 111 auf der der Klemmfläche 110 gegenüberliegenden Seite der Keilfläche 111 in Richtung Klemmkeilanlagefläche 101 des Aufnahmeschachts 10 weist.

Durch Befestigungsmittel 112 ist die Klemmvorrichtung 11 und damit der Werkzeughalter 2 an der Werkzeugaufnahmeplatte 1 lösbar befestigbar, sodass auch der Werkzeughalter 2 lösbar im Aufnahmeschacht 10 befestigbar ist. Als Befestigungsmittel 112 sind hier mehrere Schrauben vorgesehen, welche mit einem Innensechskant versehen einfach an der Werkzeugaufnahmeplatte 1 festschraubbar sind, womit der Werkzeughalter 2 klemmend ortsfest und verdrehgesichert indirekt gehalten wird. Eine solche Werkzeugaufnahmeplatte 1 mit Klemmvorrichtung 11 zur Befestigung von Werkzeughaltern 2 ist so aus dem Stand der Technik bekannt, was auch aus Figur 5 hervorgeht.

Die hier dargestellte Klemmvorrichtung 11 gemäss Figur 1 ist in Richtung ihrer Längsachse L länger ausgeführt, als der Werkzeughalter 2 und weist neu an dem, dem Werkzeug 20 abgewandten anschlagseitigen Ende A einen Anschlag 116 auf. Der Werkzeughalter 2 kann bis zum Kontakt einer Stirnfläche 22 des Werkzeughalters 2 mit dem Anschlag 116 relativ zur Klemmvorrichtung 11 ausgerichtet, befestigt werden. Zur einfachen Justage des Werkzeughalters 2 ist hier ein Anschlag 116 mit einer Schraube vorgesehen, welche durch einen Vorsprung am anschlagseitigen Ende A auf die gewünschte Auslenkung parallel zur Längsachse L der Klemmvorrichtung 11 schraubbar ist.

Um das Werkzeug 20 während des Drehprozesses zu Kühlen, wird ein Kühlmittel durch einen, mindestens teilweise durch die Klemmvorrichtung 11 verlaufenden Kühlmittelkanal 113, auf das Werkzeug 20 gebracht. Dies ist in den Figuren 2b, 3 und 4 erkennbar. Von einer Kühlmittelzuleitung 114 und eine anschliessende Kupplung 115 wird das Kühlmittel in den Kühlmittelkanal 113 eingebracht, bevor es nach Durchgang durch den Kühlmittelkanal 113 unter ausreichend hohem Druck gezielt mittels Kühlmittelstrahl 5 auf das Werkzeug 3 gelenkt wird. In der Schnittansicht von Figur 2b entlang der Linie C-C aus Figur 2a ist zu erkennen, dass der Kühlmittelkanal 113 hier in der Klemmfläche 110 teilweise ausgespart verläuft. Der Kühlmittelkanal 113 ist damit zur ersten Seitenfläche 20 des Werkzeughalters 2 offen ausgeführt.

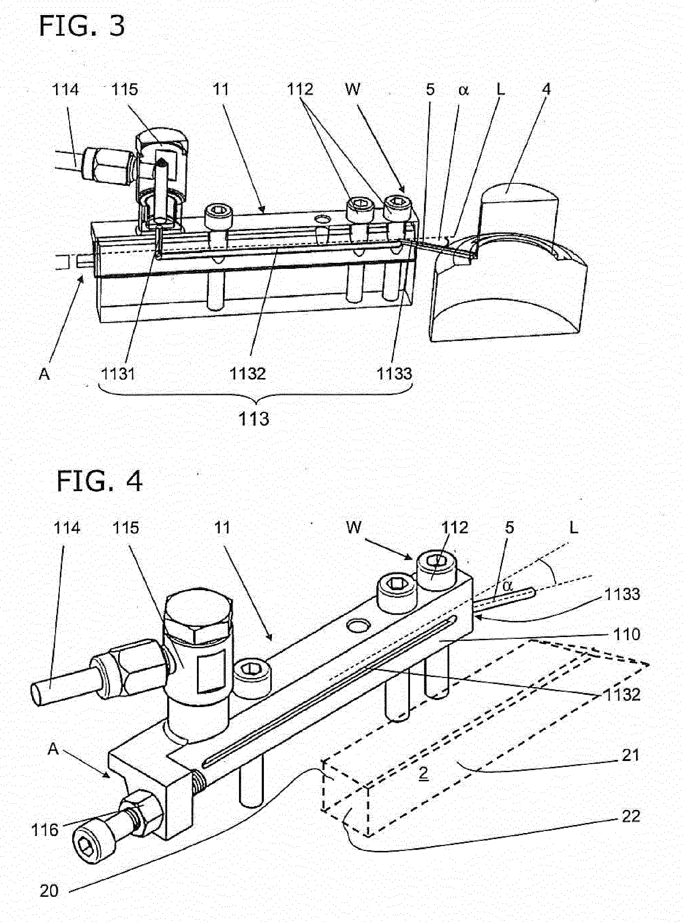

In der Schnittansicht gemäss Figur 3 ist der Weg des Kühlmittels über die Kühlmittelzuleitung 114, die Kupplung 115 in den Kühlmittelkanal 113 dargestellt. Der Kühlmittelkanal 113 umfasst einen Einlass 1131, einen Zwischenkanal 1132 und einen Auslass 1133.

Die externe Kühlmittelzuleitung 114 kann als Rohr oder Schlauch aus Metall, insbesondere aus Edelstahl oder aus Kunststoff, insbesondere aus PTFE, PFA, Vinyl, Nylon, Polyethylen oder Gummi, üblicherweise mit einer Nenngrösse von 1/8 Zoll ausgeführt sein. Die Kühlmittelzuleitung 114 wird an einer Kupplung 115 befestigt, welche unterschiedliche Formen aufweisen kann und unter anderem auch als Schnellkupplung ausgebildet sein kann.

Der Durchlass der Kupplung 115 mündet in den Einlass 1131, welcher hier in etwa auf der halben Länge der Klemmvorrichtung 11 in Richtung Längsachse L angeordnet ist. Der Einlass 1131 ist als Bohrung ausgeführt und quert die Klemmvorrichtung 11 etwa senkrecht zur Längsachse L bis zur Hälfte der Querausdehnung der Klemmvorrichtung 11. Es ist vorteilhaft, wenn Mündung von der Kupplung 115 in den Einlass 1131 möglichst weit vom Zerspanungsbereich bzw. vom Werkzeug 3 entfernt angeordnet ist.

Der Einlass 1131 kann wahlweise auch im Bereich des anschlagseitigen Endes A der Klemmvorrichtung 11 angeordnet sein, wobei dann ein entsprechend längerer Zwischenkanal 1132 ausgebildet sein muss. In diesem Fall ist die Kühlmittelzuleitung 114 nur bis zum anschlagseitigen Ende A der Klemmvorrichtung 11 geführt und die Kupplung 115 ist ebenfalls zum anschlagseitigen Ende A hin verlagert.

An den Einlass 1131 schliesst sich der Zwischenkanal 1132 an, welcher den Körper der Klemmvorrichtung 11 mindestens teilweise quert und in den Auslass 1133 mündet. Der Auslass 1133 ist derart im Bereich des werkzeugseitigen Endes W der Klemmvorrichtung 11 angeordnet, dass bei festgeklemmter Klemmvorrichtung 11 ein Kühlmittelstrahl 5 auf das werkzeugseitige Ende des Werkzeughalters 2 bzw. auf das daran befestigte Werkzeug 3 gerichtet ist. Hier ist der Auslass 1133 als Bohrung durch den Körper der Klemmvorrichtung 11 geformt. Diese Bohrung ist in einer Längsschnittebene um einen Ablenkwinkel α relativ zur Längsachse L der Klemmvorrichtung 11 verlaufend ausgespart.

Der Zwischenkanal 1132 ist in einer bevorzugten Ausführungsform als Nut 1132 in der Klemmfläche 110 der Klemmvorrichtung 11 ausgestaltet. Da auch die Klemmvorrichtung 11 aus Stahl besteht, sind Bohrungen den Körper der Klemmvorrichtung 11 vollständig querend zeitaufwändig und teuer herzustellen, weshalb die Aussparung der Nut 1132 in der Klemmfläche 110 vorteilhaft ist. Wird die Nut 1132 als Zwischenkanal 1132 gewählt, werden drei Seitenflächen des Zwischenkanals 1132 von dem Körper der Klemmvorrichtung 11 gebildet, wodurch ein offener Zwischenkanal 1132 resultiert. Der Kühlmittelkanal 113 ist damit zur Klemmfläche 110 hin teilweise offen ausgeführt.

Bei mittels Klemmvorrichtung 11 festgeklemmten Werkzeughalter 2, liegen die erste Seitenfläche 20 des Werkzeughalters 2 und die Klemmfläche 110 der Klemmvorrichtung 11 parallel zueinander fluchtend, sodass die erste Seitenfläche 20 den Zwischenkanal 1132 des Kühlmittelkanals 113 gegen den Werkzeughalter 2 abdichtet. Dadurch wird Kühlmittel durch die in der Klemmfläche 110 eingeformte Nut 1132 bis zum Auslass 1133 auch unter hohem Druck geleitet. Bei Gestaltung des Zwischenkanals 1132 als Nut in der Klemmfläche 110 dient die erste Seitenfläche 20 des Werkzeughalters 2 als Abschlussfläche des Zwischenkanals 1132 und wird partiell vorgekühlt, während das Kühlmittel durch den Zwischenkanal 1132 in Richtung werkzeugseitigem Ende W fliesst.

Der Zwischenkanal 1132 kann auch als geschlossener Kanal in den Körper der Klemmvorrichtung 11, den Einlass 1131 und den Auslass 1133 innerhalb der Klemmvorrichtung 11 verbindend angeordnet sein. Dabei kann der Kühlmittelkanal 113 zentrisch oder exzentrisch durch den Körper der Klemmvorrichtung 11 verlaufend eingebracht sein. Der Kühlmittelkanal 113 ist dann von der ersten Seitenfläche 20 und dem Werkzeughalter 2 vollständig entfernt angeordnet. Womit der Kühlmittelkanal 113 vollständig in der Klemmvorrichtung 11 verlaufend, von dem Werkzeughalter 2 beabstandet angeordnet ist.

In einer weiteren Ausführungsform kann der Auslass 1133 als Nut in der Klemmfläche 110 eingeformt sein, wobei der Abschluss des Auslasses 1133 am werkzeugseitigen Ende W der Klemmvorrichtung 11 als Nut mit dem Ablenkwinkel α zur Längsachse L in einer Längsschnittebene ausgestaltet ist. Eine solche Abwandlung ist in den Figuren nicht dargestellt. Die Herstellung des Auslasses 1133 ist entsprechend erleichtert.

Der Auslass 1133 kann auch aus mehreren Austrittskanälen oder Bohrungen ausgebildet werden, je nach Bedürfnis an den zu erreichenden Kühlmittelstrahl 5 bzw. die durchzuführende Zerspanungsanwendung. Entsprechend können die Austrittskanäle, die den Auslass 1133 bilden, in unterschiedlichen Ablenkwinkeln α relativ zueinander ausgerichtet sein.

### Herstellungsverfahren und Umrüstungsverfahren einer Klemmvorrichtung

Bestehende Werkzeugaufnahmeplatten 1 mit mindestens einem Aufnahmeschacht 10, in welchem ein Werkzeughalter 2 mittels Klemmvorrichtung 11 lösbar gehalten werden kann, sind einfach umrüstbar und mit dem neuen Kühlsystem ausrüstbar. Es muss ausschliesslich die Klemmvorrichtung 11 angepasst werden, wobei die Werkzeugaufnahmeplatte 1 und der Werkzeughalter 2 unverändert bleiben. Die Klemmvorrichtung 11 muss mit dem Kühlmittelkanal 113 versehen werden, wobei der Einlass 1131, der Zwischenkanal 1132 und der Auslass 1133 wie oben beschrieben in unterschiedlichen Ausgestaltungen in oder am Körper der Klemmvorrichtung 11 angebracht werden. Der Einlass 1131 wird mit der Kupplung 115 verbunden und die Kühlmittelzuleitung 114 kann dann mit der Kupplung 115 lösbar verbunden werden.

Somit kann bei einem Werkzeugwechsel die Kühlmittelzuleitung 114 an der Klemmvorrichtung 11 befestigt bleiben und entsprechend die Kühlung nach dem Werkzeugwechsel schnell wieder gestartet werden. Die Umrüstung durch den Austausch bestehender Klemmvorrichtungen mit Klemmvorrichtungen 11 mit integriertem Kühlmittelkanal 113 einfach und schnell durchgeführt werden. Es können weiterhin standardisierte Werkzeugaufnahmeplatten 1 und Werkzeughalter 2 verwendet werden.

In den hier beschriebenen Ausführungsformen ist der Kühlmittelkanal 113 mittelbar oder direkt am Werkzeughalter 2 befestigbar, je nach Ausgestaltung der Abschnitte des Kühlmittelkanals 113. Da der Kühlmittelkanal nicht durch den Werkzeughalter 2 hindurch geht, sind weiterhin die bekannten einfachen und einstückigen Werkzeughalter 2 verwendbar. Wenn die Kühlmittelzuleitung 114 mittel Kupplung 115 an der Klemmvorrichtung 11 angekoppelt ist, kann sogar eine Entnahme des Werkzeughalters 2 erfolgen, ohne dass die Kühlmittelzuleitung 114 abmontiert werden muss.

### Bezugszeichenliste

1 Werkzeugaufnahmeplatte
I Längsrichtung
   10 Aufnahmeschacht
      100 Werkzeuganlagefläche
      101 Klemmkeilanlagefläche
   11 Klemmvorrichtung
      110 Klemmfläche
      111 Keilfläche
      112 Befestigungsmittel
      113 Kühlmittelkanal
         1131 Einlass
         1132 Zwischenkanal
         1133 Auslass
      114 Kühlmittelzuleitung
      115 Kupplung
      116 Anschlag
      α Ablenkwinkel
      L Längsachse
      W werkzeugseitiges Ende
      A anschlagseitiges Ende
2 Werkzeughalter (Drehstahl)
   20 erste Seitenfläche
   21 zweite Seitenfläche
   22 Stirnfläche
3 Werkzeug (Drehwerkzeug, z.B. Wendeschneidplatte)
4 Werkstück
5 Kühlmittelstrahl

## Patentansprüche

1. Keilklemmvorrichtung (11) zur lösbaren orts- und drehfesten Befestigung eines Werkzeughalters (2) in einem Aufnahmeschacht (10) einer Werkzeugaufnahmeplatte (1) für einen Drehautomat,
wobei die Keilklemmvorrichtung (11) eine keilartige Form in einer Ebene senkrecht zur Längsachse L der Klemmvorrichtung (11) hat und
eine Klemmfläche (110) aufweist, die mittelbar oder unmittelbar mit einer ersten Seitenfläche (20) des Werkzeughalters (2) klemmend in Kontakt bringbar ist
und
die Keilklemmvorrichtung (11) lösbar mittels Befestigungsmitteln (112) an der Werkzeugaufnahmeplatte (1) unter Klemmung des Werkzeughalters (2) zwischen Klemmfläche (110) und einer Werkzeuganlagefläche (100) des Aufnahmeschachtes (10)
befestigbar ist,
wobei die Keilklemmvorrichtung (11) zwischen eine erste Seitenfläche (20) des Werkzeughalters (2) und eine Klemmkeilanlagefläche (101) des Aufnahmeschachtes (10) eingeführt werden kann,
wobei die Keilklemmvorrichtung (11) den Werkzeughalter (2) mit einer zweiten Seitenfläche (21) gegen die Werkzeuganlagefläche (100) des Aufnahmeschachts (10) drückt, und
wobei die Klemmfläche (110) dabei direkt an der ersten Seitenfläche (20) des Werkzeughalters (2) parallel verlaufend anliegt, während eine Keilfläche (111) auf der der Klemmfläche (110) gegenüberliegenden Seite der Keilfläche (111) in Richtung Klemmkeilanlagefläche (101) des Aufnahmeschachts (10) weist, **dadurch gekennzeichnet, dass**
die Keilklemmvorrichtung (11) einen Kühlmittelkanal (113) aufweist, der von einem Einlass (1131), über einen Zwischenkanal (1132) bis zu einem Auslass (1133) die Keilklemmvorrichtung (11) mindestens teilweise querend verlaufend in oder an der Keilklemmvorrichtung (11) angeordnet ist und damit ein in die Keilklemmvorrichtung (11) integrierter Kühlmittelkanal (113) ausgestaltet ist,
wobei der Auslass (1133) derart im Bereich des werkzeugseitigen Endes (W) der Klemmvorrichtung (11) angeordnet ist, dass bei festgeklemmter Klemmvorrichtung (11) ein Kühlmittelstrahl (5) auf das werkzeugseitige Ende des Werkzeughalters (2) erreichbar ist.

2. Keilklemmvorrichtung (11) nach Anspruch 1, **wobei** der Kühlmittelkanal (113) mindestens teilweise parallel zur Längsachse (L) der Keilklemmvorrichtung (11) verlaufend, zentrisch oder exzentrisch durch den Körper der Keilklemmvorrichtung (11) verlaufend, angeordnet ist.

3. Keilklemmvorrichtung (11) nach einem der Ansprüche 1 oder 2, **wobei** der Kühlmittelkanal (113) einen Zwischenkanal (1132) aufweist, welcher von einer Nut (1132) in der Klemmfläche (110) der Keilklemmvorrichtung (11) gebildet ist, wobei der Kühlmittelkanal (113) zur Klemmfläche (110) hin teilweise offen ist.

4. Keilklemmvorrichtung (11) nach einem der vorhergehenden Ansprüche, **wobei** der Auslass (1133) in einer Längsschnittebene um einen Ablenkwinkel (α) relativ zur Längsachse (L) der Keilklemmvorrichtung (11) abgelenkt ist.

5. Keilklemmvorrichtung (11) nach Anspruch 4, **wobei** der Auslass (1133) eine Mehrzahl von Austrittskanälen oder Bohrungen umfasst.

6. Keilklemmvorrichtung (11) nach Anspruch 4, **wobei** der Auslass (1133) als Nut in der Klemmfläche (110) eingeformt ist.

7. Keilklemmvorrichtung (11) nach einem der vorhergehenden Ansprüche, **wobei** der Einlass (1131) möglichst weit vom Zerspanungsbereich bzw. vom Werkzeug (3) entfernt angeordnet ist, insbesondere mindestens annähernd in der Mitte der Keilklemmvorrichtung (11) in Richtung Längsachse (L) verlaufend angeordnet ist.

8. Keilklemmvorrichtung (11) nach einem der vorhergehenden Ansprüche, **wobei** die Keilklemmvorrichtung (11) am Einlass (1131) eine Kupplung (115) aufweist, an welcher eine Kühlmittelzuleitung (114) ankuppelbar ist.

9. Keilklemmvorrichtung (11) nach Anspruch 8, **wobei** die Kupplung (115) eine Schnellkupplung ist.

10. Keilklemmvorrichtung (11) nach einem der vorhergehenden Ansprüche, **wobei** die Keilklemmvorrichtung (11) im Bereich des anschlagseitigen Endes (A) einen Anschlag (116) aufweist, an welchen eine Stirnfläche (22) des Werkzeughalters (2) beim Einbau des Werkzeughalters (2) definiert anliegen kann.

11. Keilklemmvorrichtung (11) nach Anspruch 10, **wobei** der Anschlag (116) eine Schraube aufweist, mittels welcher die Auslenkung des Werkzeughalters (2) definierbar wird.

12. Herstellungsverfahren oder Umrüstungsverfahren einer Keilklemmvorrichtung (11) gemäss einem der Ansprüche 1 bis 11, zur lösbaren Befestigung eines Werkzeughalters (2) in einem Aufnahmeschacht (10) einer Werkzeugaufnahmeplatte (1) für einen Drehautomat, wobei die Keilklemmvorrichtung (11) eine Klemmfläche (110) aufweist, die mittelbar oder unmittelbar mit einer ersten Seitenfläche (20) des Werkzeughalters (2) klemmend in Kontakt bringbar ist, **gekennzeichnet durch die Schritte:**
Einformung eines Kühlmittelkanals (113), umfassend einen Einlass (1131), einen Auslass (1133) und einen Zwischenkanal (1132) in den Körper der Keilklemmvorrichtung (11).

13. Herstellungsverfahren oder Umrüstungsverfahren einer Keilklemmvorrichtung (11) gemäss Anspruch 13, **wobei** der Zwischenkanal (1132) durch eine Nut in der Klemmfläche (110) der Keilklemmvorrichtung (11) gebildet wird.

## Claims

1. Wedge clamping device (11) for the detachable fixed and positive fastening of a tool holder (2) in a receiving shaft (10) of a tool holder plate (1) for an automatic lathe,
wherein the wedge clamping device (11) is wedge-shaped in a plane perpendicular to the longitudinal axis L of the clamping device (110) and
has a clamping surface (11) which can be directly or indirectly brought into clamping contact with a first side surface (20) of the tool holder (2)
and
the wedge clamping device (11) is detachably fastenable by means of fastening means (112) to the tool holder plate (1) through clamping the tool holder (2) between the clamping surface (110) and a tool contact surface (100) of the receiving shaft (10),
wherein the wedge clamping device (11) can be inserted between a first side surface (20) of the tool holder (2) and a clamping wedge surface (101) of the receiving shaft (10),
wherein the wedge clamping device (11) presses the tool holder (2) with a second side surface (21) against the tool contact surface (100) of the receiving shaft (10) and
wherein in doing so the clamping surface (110) directly contacts in parallel the first side surface (20) of the tool holder (2), while a wedge surface (111) on the side of the wedge surface (111) opposite the clamping surface (110) faces in the direction of the clamping wedge surface (101) of the receiving shaft (10),
**characterised in that**
the wedge clamping device (11) comprises a cooling agent channel (113) which is arranged in or on the wedge clamping device (11) extending from an inlet (1131) via an intermediate channel (1132) to an outlet (1133), at least partially crossing the wedge clamping device (11) and thereby a cooling agent channel (113) is formed integrated into the wedge clamping device (11),
wherein the outlet (1133) is arranged in the area of the tool-side end (W) of the clamping device (11) in such a way that in the case of a firmly clamped clamping device (11) a cooling agent jet (5) onto the tool-side end of the tool holder (2) is achievable.

2. Wedge clamping device (11) according to claim 1
wherein the cooling agent channel (113) is arranged to extend centrically or eccentrically through the body of the wedge clamping device (11) at least partially in parallel to the longitudinal axis (L) of the wedge clamping device (11).

3. Wedge clamping device (11) according to one of claims 1 to 2
wherein the cooling agent channel (113) comprises an intermediate channel (1132) which is formed by a groove (1132) in the clamping surface (110) of the wedge clamping device (11), wherein the cooling agent channel (113) is at least partially open towards the clamping surface (110).

4. Wedge clamping device (11) according to any one of the preceding claims
wherein in a longitudinal section plane the outlet (1133) is deflected about a deflection angle (α) relative to the longitudinal axis (L) of the wedge clamping device (11).

5. Wedge clamping device (11) according to claim 4
wherein the outlet (1133) comprises a plurality of outlet channels or holes.

6. Wedge clamping device (11) according to claim 4
wherein the outlet (1133) is formed as a groove in the clamping surface (110).

7. Wedge clamping device (11) according to any one of the preceding claims,
wherein the inlet (1131) is arranged as far away as possible from the machining area and/or the tool (3), in particular at least approximately in the middle of the wedge clamping device (11) running in the direction of the longitudinal axis (L).

8. Wedge clamping device (11) according to any one of the preceding claims
wherein at the inlet (1131) the wedge clamping device (11) has coupling (115) to which a cooling agent supply line (114) can be coupled.

9. Wedge clamping device (11) according to claim 8
wherein the coupling (115) is a quick coupling.

10. Wedge clamping device (11) according to any one of the preceding claims
wherein in the area of the stop-side end (A) the wedge clamping device (11) has a stop (116) on which an end face (22) of the tool holder (2) defined when incorporating the tool holder (2) can be in contact.

11. Wedge clamping device (11) according to claim 10
wherein the stop (116) has a screw by means of which the deflection of the tool holder (2) can be defined.

12. Method of producing or method of retooling a wedge clamping device (11) according to any one of claims 1 to 11 for the detachable fastening of a tool holder (2) in a receiving shaft (10) of a tool holder plate (1) for an automatic lathe, wherein the wedge clamping device (11) has a clamping surface (110) which can be directly or indirectly brought into clamping contact with a first side surface (20) of the tool holder (2) **characterised by** the steps
forming a cooling agent channel (113) comprising an inlet (1131), and outlet (1133) and an intermediate channel (1132) in the body of the wedge clamping device (11).

13. Method of producing or method retooling a wedge clamping device (11) according to claim 13, wherein the intermediate channel (1132) is formed by a groove in the clamping surface (110) of the wedge clamping device (11).

## Revendications

1. Dispositif de serrage en forme de coin (11) pour la fixation amovible fixe et solidaire en rotation d'un porte-outil (2) dans une cavité de réception (10) d'une plaque d'outillage (1) pour un tour automatique,
sachant que le dispositif de serrage en forme de coin (11) a une forme de coin dans un plan perpendiculaire à l'axe longitudinal L du dispositif de serrage (11),
et
comporte une surface de serrage (110), qui peut être mise en contact en serrant directement ou indirectement avec une première surface latérale (20) du porte-outil (2)
et
sachant que le dispositif de serrage en forme de coin (11) peut être fixé amovible au moyen de moyens de fixation (112) sur la plaque d'outillage (1) en serrant le porte-outil (2) entre la surface de serrage (110) et une surface d'appui d'outil (100) de la cavité de réception (10),
sachant que le dispositif de serrage en forme de coin (11) peut être introduit entre une première surface latérale (20) du porte-outil (2) et une surface d'appui de serrage en forme de coin (101) de la cavité de réception (10),
sachant que le dispositif de serrage en forme de coin (11) du porte-outil (2) appuie avec une deuxième surface latérale (21) contre la surface d'appui d'outil (100) de la cavité de réception (10),
et
sachant que la surface de serrage (110) s'applique à cet effet en passant de façon parallèle, directement à la première surface latérale (20) du porte-outil (2), alors qu'une surface en forme de coin (111) est tournée vers le côté de la surface en forme de coin (111) opposée à la surface de serrage (110) en direction de la surface d'appui de serrage en forme de coin (101) de la cavité de réception (10),
**caractérisé en ce que**
le dispositif de serrage en forme de coin (11) comporte un conduit de réfrigérant (113), qui est disposé dans ou sur le dispositif de serrage en forme de coin (11) passant au moins en partie transversalement d'une entrée (1131) jusqu'à une sortie (1133) par un conduit intermédiaire (1132) et un conduit de réfrigérant (113) intégré dans le dispositif de serrage en forme de coin (11) est de ce fait constitué,
sachant que la sortie (1133) est disposée dans la zone de l'extrémité côté outil (W) du dispositif de serrage (11) de telle sorte qu'un jet de réfrigérant (5) sur l'extrémité côté outil du porte-outil (2) peut être atteinte avec le dispositif de serrage (11) fermement serré.

2. Dispositif de serrage en forme de coin (11) selon la revendication 1, sachant que le conduit de réfrigérant (113) est disposé passant au moins en partie parallèlement à l'axe longitudinal (L) du dispositif de serrage en forme de coin (11), passant de façon centrale ou excentrée à travers le corps du dispositif de serrage en forme de coin (11).

3. Dispositif de serrage en forme de coin (11) selon l'une quelconque des revendications 1 ou 2, sachant que le conduit de réfrigérant (113) comporte un conduit intermédiaire (1132), lequel est formé par une rainure (1132) dans la surface de serrage (110) du dispositif de serrage en forme de coin (11), sachant que le conduit de réfrigérant (113) est en partie ouvert vers la surface de serrage (110).

4. Dispositif de serrage en forme de coin (11) selon l'une quelconque des revendications précédentes, sachant que la sortie (1133) est déviée dans un plan de coupe longitudinal d'un angle de déviation (α) par rapport à l'axe longitudinal (L) du dispositif de serrage en forme de coin (11).

5. Dispositif de serrage en forme de coin (11) selon la revendication 4, sachant que la sortie (1133) comprend une pluralité de conduits de sortie ou de trous.

6. Dispositif de serrage en forme de coin (11) selon la revendication 4, sachant que la sortie (1133) est conformée sous la forme d'une rainure dans la surface de serrage (110).

7. Dispositif de serrage en forme de coin (11) selon l'une quelconque des revendications précédentes, sachant que l'entrée (1131) est disposée aussi loin que possible de la zone d'enlèvement de copeaux ou de l'outil (3), est notamment disposée passant au moins à peu près au centre du dispositif de serrage en forme de coin (11) en direction de l'axe longitudinal (L).

8. Dispositif de serrage en forme de coin (11) selon l'une quelconque des revendications précédentes, sachant que le dispositif de serrage en forme de coin (11) comporte à l'entrée (1131) un accouplement (115) sur lequel une conduite d'arrivée de réfrigérant (114) peut être accouplée.

9. Dispositif de serrage en forme de coin (11) selon la revendication 8, sachant que l'accouplement (115) est un accouplement rapide.

10. Dispositif de serrage en forme de coin (11) selon l'une quelconque des revendications précédentes, sachant que le dispositif de serrage en forme de coin (11) comporte une butée (116) dans à proximité de l'extrémité côté butée (A) sur laquelle peut s'appliquer de façon définie une surface frontale (22) du porte-outil (2) lors du montage du porte-outil (2).

11. Dispositif de serrage en forme de coin (11) selon la revendication 10, sachant que la butée (116) comporte une vis au moyen de laquelle l'orientation du porte-outil (2) peut être définie.

12. Procédé de fabrication ou procédé de conversion d'un dispositif de serrage en forme de coin (11) selon l'une quelconque des revendications 1 à 11, pour la fixation amovible d'un porte-outil (2) dans une cavité de réception (10) d'une plaque d'outillage (1) pour un tour automatique, sachant que le dispositif de serrage en forme de coin (11) comporte une surface de serrage (110), qui peut être mise en contact en serrant directement ou indirectement avec une première surface latérale (20) du porte-outil (2),
**caractérisé par** les étapes de :
conformation d'un conduit de réfrigérant (113), comprenant une entrée (1131), une sortie (1133) et un conduit intermédiaire (1132) dans le corps du dispositif de serrage en forme de coin (11).

13. Procédé de fabrication ou procédé de conversion d'un dispositif de serrage en forme de coin (11) selon la revendication 13, sachant que le conduit intermédiaire (1132) étant formé par une rainure dans la surface de serrage (110) du dispositif de serrage en forme de coin (11) .
